# EUROPEAN PATENT APPLICATION

(11) **EP 4 844 976 A1**
(43) Date of publication of application: **25.11.2026**
(21) Application number: 24918765.9
(22) Date of filing: 15.01.2024
(51) Int. Cl.: H02J 7/00, H02J 1/00

(54) **VEHICLE POWER SUPPLY DEVICE AND ABNORMALITY DETECTION METHOD FOR VEHICLE POWER SUPPLY DEVICE**

(71) Applicant: JTEKT CORPORATION, Kariya-shi, Aichi 448-8652 (JP)
(72) Inventor: OTA, Kohei, Kariya-shi, Aichi 448-8652 (JP); SATO, Fumihiko, Kariya-shi, Aichi 448-8652 (JP); HIBINO, Tokuaki, Kariya-shi, Aichi 448-8652 (JP); INABA, Daiki, Kariya-shi, Aichi 448-8652 (JP); NITTA, Hiroki, Kariya-shi, Aichi 448-8652 (JP); NAKAYASHIKI, Takeshi, Kadoma-shi, Osaka 571-8506 (JP); IDE, Yusuke, Kadoma-shi, Osaka 571-8506 (JP); SETSU, Yugo, Kadoma-shi, Osaka 571-8506 (JP); KITTAKA, Kuniyuki, Kadoma-shi, Osaka 571-8506 (JP)
(74) Representative: Winter, Brandl - Partnerschaft mbB
(86) International application number: PCT/JP2024/000739
(87) International publication number: WO 2025/154117

(57) **Abstract**

A vehicle power supply device (1) includes: a power supply line constituting part of a power supply path through which electric power is supplied from an external power supply to a power supply target; a discharge line (Lsu) branching from the power supply line; an auxiliary power supply (41) connected to the power supply line via the discharge line; a boost circuit (42) provided on the discharge line; a backup relay provided on the output side of the boost circuit on the discharge line; and a regenerative power absorbing circuit (46). The regenerative power absorbing circuit includes an absorption line (Lab) connecting the power supply line to ground, and a Zener diode (71) provided on the absorption line. The vehicle power supply device further includes: a high-voltage generating diode (81) provided upstream of the Zener diode on the absorption line; and a branch line (Lbr) branching from a connection point on the discharge line between the boost circuit and the backup relay and connected to a connection point on the absorption line between the high-voltage generating diode and the Zener diode.

## Description

### TECHNICAL FIELD

The present disclosure relates to vehicle power supply devices and methods for detecting an abnormality in a vehicle power supply device.

### BACKGROUND ART

For example, Patent Document 1 discloses a vehicle power supply device that supplies electric power to a steering device of a vehicle. As described in this document, a motor used in the steering device may generate regenerative power due to a reaction force generated when, for example, a wheel collides with a curb or the like.

In view of this, the vehicle power supply device of Patent Document 1 includes a main battery, an auxiliary battery, a discharge circuit, a charging circuit, and a high-voltage suppression circuit. The discharge circuit and the charging circuit are connected in parallel to each other between the auxiliary battery and the steering device. The discharge circuit operates when electric power is supplied from the auxiliary battery to the steering device, and the charging circuit operates when the auxiliary battery is charged based on electric power from the main battery. The high-voltage suppression circuit is provided on a power supply line that connects the discharge circuit and the charging circuit to the steering device. The high-voltage suppression circuit is configured to cause a current to flow to ground when the voltage of the power supply line rises due to generation of regenerative power in the steering device. This suppresses failure of components of the vehicle power supply device caused by the rise in the voltage of the power supply line.

### Related Art Documents

### Patent Documents

Patent Document 1: Japanese Unexamined Patent Application Publication No. 2018-113814 (JP 2018-113814 A)

### SUMMARY OF THE INVENTION

### Problem to be Solved by the Invention

When an abnormality occurs in the high-voltage suppression circuit, the high-voltage suppression circuit may not be able to operate properly, and may fail to absorb regenerative power generated in the steering device. However, Patent Document 1 does not mention detection of an abnormality in the high-voltage suppression circuit, and thus there is still room for improvement in this respect.

Such an issue is not limited to a case where a power supply target is a steering device, and may similarly arise when the power supply target is a device that generates regenerative power.

### Means for Solving the Problem

One aspect of the present disclosure provides a vehicle power supply device configured to supply electric power to a power supply target. The vehicle power supply device includes: a power supply line that constitutes part of a power supply path through which electric power is supplied from an external power supply to the power supply target; a drive relay provided on the power supply line; a discharge line branching from a connection point on the power supply line downstream of the drive relay; an auxiliary power supply connected to the power supply line via the discharge line; a boost circuit provided on the discharge line and configured to boost a voltage of the auxiliary power supply and output the boosted voltage; a backup relay provided on an output side of the boost circuit on the discharge line; and a regenerative power absorbing circuit configured to absorb regenerative power generated in the power supply target. The regenerative power absorbing circuit includes: an absorption line that connects a portion of the power supply line downstream of the drive relay to ground; and a Zener diode provided on the absorption line and configured to allow a current to flow from the power supply line toward ground when a reverse voltage applied to the Zener diode is higher than or equal to a Zener voltage. The vehicle power supply device further includes: a high-voltage generating diode provided upstream of the Zener diode on the absorption line and configured to allow a current to flow from the power supply line toward the Zener diode and to restrict a current from flowing from the Zener diode toward the power supply line; and a branch line branching from a connection point on the discharge line between the boost circuit and the backup relay and connected to a connection point on the absorption line between the high-voltage generating diode and the Zener diode.

Another aspect of the present disclosure provides a method for detecting an abnormality in a vehicle power supply device configured to supply electric power to a power supply target. The vehicle power supply device includes: a power supply line that constitutes part of a power supply path through which electric power is supplied from an external power supply to the power supply target; a drive relay provided on the power supply line; a discharge line branching from a connection point on the power supply line downstream of the drive relay; an auxiliary power supply connected to the power supply line via the discharge line; a boost circuit provided on the discharge line and configured to boost a voltage of the auxiliary power supply and output the boosted voltage; a backup relay provided on an output side of the boost circuit on the discharge line; and a regenerative power absorbing circuit configured to absorb regenerative power generated in the power supply target. The regenerative power absorbing circuit includes: an absorption line that connects a portion of the power supply line downstream of the drive relay to ground; and a Zener diode provided on the absorption line and configured to allow a current to flow from the power supply line toward ground when a reverse voltage applied to the Zener diode is higher than or equal to a Zener voltage. The vehicle power supply device further includes: a high-voltage generating diode provided upstream of the Zener diode on the absorption line and configured to allow a current to flow from the power supply line toward the Zener diode and to restrict a current from flowing from the Zener diode toward the power supply line; and a branch line branching from a connection point on the discharge line between the boost circuit and the backup relay and connected to a connection point on the absorption line between the high-voltage generating diode and the Zener diode. The method for detecting an abnormality includes: detecting a determination voltage that is a voltage on the branch line; and determining that an abnormality has occurred in the Zener diode when the determination voltage is outside a predetermined voltage range including the Zener voltage while the backup relay is controlled to turn off and the boost circuit is controlled to output a voltage higher than the Zener voltage.

### BRIEF DESCRIPTION OF THE DRAWINGS

[FIG. 1] FIG. 1 is a schematic configuration diagram of a vehicle power supply device according to an embodiment and a steering device that is a power supply target of the vehicle power supply device.
[FIG. 2] FIG. 2 is a block diagram illustrating an electrical configuration of the vehicle power supply device shown in FIG. 1.
[FIG. 3] FIG. 3 is a flowchart illustrating procedures of various processes executed by a power supply control circuit shown in FIG. 2.
[FIG. 4] FIG. 4 shows graphs illustrating an example of a change in output voltage when the power supply control circuit shown in FIG. 2 executes a backup process.

### MODES FOR CARRYING OUT THE INVENTION

Hereinafter, one embodiment of a vehicle power supply device and a method for detecting an abnormality in a vehicle power supply device will be described with reference to the drawings.

### (Overall Configuration)

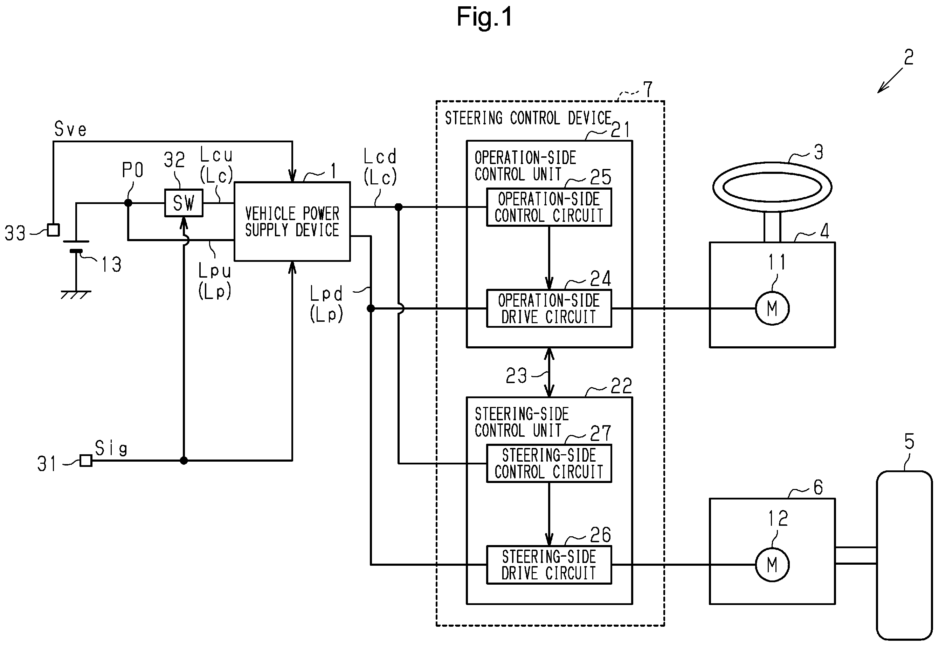

As shown in FIG. 1, a vehicle power supply device 1 of the present embodiment supplies electric power to a steering device 2 of a vehicle that is a power supply target. The steering device 2 is a steer-by-wire steering device. The steering device 2 includes an operation unit 4 operated by a driver via a steering wheel 3, a steering unit 6 that steers steered wheels 5, and a steering control device 7 that controls operation of the operation unit 4 and the steering unit 6. The steering device 2 may have a structure in which a power transmission path between the operation unit 4 and the steering unit 6 is always mechanically interrupted, or may have a structure in which the operation unit 4 and the steering unit 6 can be selectively mechanically disconnected from each other by a clutch.

The operation unit 4 includes an operation-side motor 11. The operation-side motor 11 generates an operation reaction force that resists operation of the steering wheel 3 by the driver. The steering unit 6 includes a steering-side motor 12. The steering-side motor 12 generates a steering force that steers the steered wheels 5.

The operation-side motor 11 and the steering-side motor 12 are connected to the steering control device 7. The operation-side motor 11 may include a plurality of coil groups that is supplied with electric power through a plurality of electrically independent power supply systems. That is, the operation-side motor 11 may be an electrically redundant motor. Similarly, the steering-side motor 12 may be an electrically redundant motor. Alternatively, the operation-side motor 11 and the steering-side motor 12 may be motors that are not electrically redundant. In the illustrated example, the operation-side motor 11 and the steering-side motor 12 are motors that are not electrically redundant. The steering control device 7 controls operation of the operation-side motor 11 and the steering-side motor 12 through supply of electric power to the operation-side motor 11 and the steering-side motor 12. Electric power supplied to the operation-side motor 11 and electric power supplied to the steering-side motor 12 are supplied from an external power supply 13 mounted on the vehicle via the vehicle power supply device 1.

More specifically, the steering control device 7 includes an operation-side control unit 21 and a steering-side control unit 22. The operation-side control unit 21 controls operation of the operation-side motor 11. The steering-side control unit 22 controls operation of the steering-side motor 12. The operation-side control unit 21 and the steering-side control unit 22 are communicatively connected to each other via a local network 23 such as serial communication. The steering control device 7 of the present embodiment is a single control device including the operation-side control unit 21 and the steering-side control unit 22. **In** another embodiment, the steering control device 7 may include a control device including the operation-side control unit 21, and another control device including the steering-side control unit 22 and mechanically separated from the former control device.

The operation-side control unit 21 includes an operation-side drive circuit 24 and an operation-side control circuit 25 that controls the operation-side drive circuit 24. **In** a configuration in which the operation-side motor 11 is electrically redundant, the operation-side control unit 21 may include a plurality of operation-side drive circuits 24 corresponding to the plurality of coil groups. **In** this case, the operation-side control unit 21 may include a plurality of operation-side control circuits corresponding to the plurality of operation-side drive circuits 24, or may include a single operation-side control circuit.

The operation-side drive circuit 24 is a typical PWM inverter including a plurality of switching elements such as FETs and IGBTs. The operation-side control circuit 25 controls operation of the operation-side drive circuit 24 by outputting control signals that define the duty cycles of the respective switching elements. That is, the control signals are gate ON/OFF signals that define ON and OFF states. The duty cycle refers to the ratio of the ON-time of a switching element to a pulse period.

The operation-side control circuit 25 can be configured by (1) one or more processors that operate in accordance with a computer program (software), (2) one or more dedicated hardware circuits such as application-specific integrated circuits (ASICs) that execute at least part of various processes, or (3) a combination thereof. The processor includes a central processing unit (CPU) and a memory such as RAM and ROM, and the memory stores program code or instructions configured to cause the CPU to execute processing. The memory, that is, a non-transitory computer-readable medium, includes any available medium that is accessible by a general-purpose or dedicated computer. Various controls of the operation-side control circuit 25 are executed by the CPU executing programs stored in the memory at predetermined operation cycles.

The operation-side control circuit 25 calculates a reaction force control amount, which is a target value of the operation reaction force, based on detection results of various sensors, not shown, and information obtained from the steering-side control unit 22 via the local network 23. The operation-side control circuit 25 then generates control signals having duty cycles corresponding to the reaction force control amount. The operation-side control circuit 25 thus controls supply of electric power to the operation-side motor 11.

The steering-side control unit 22 is configured similarly to the operation-side control unit 21. That is, the steering-side control unit 22 includes a steering-side drive circuit 26 and a steering-side control circuit 27 that controls the steering-side drive circuit 26.

The steering-side control circuit 27 calculates a steering control amount, which is a target value of the steering force, based on detection results of various sensors and information obtained from the operation-side control unit 21 via the local network 23. The steering-side control circuit 27 then generates control signals having duty cycles corresponding to the steering control amount. The steering-side control circuit 27 thus controls supply of electric power to the steering-side motor 12.

### (Power Supply Path)

The steering control device 7 is connected to the external power supply 13 via the vehicle power supply device 1. Accordingly, electric power is supplied from the external power supply 13 to the steering control device 7 via the vehicle power supply device 1. The external power supply 13 is, for example, a secondary battery. The external power supply 13 can be charged by a generator such as an alternator, not shown.

More specifically, the steering control device 7 is connected to the external power supply 13 via a drive power supply line Lp and a control power supply line Lc. The control power supply line Lc branches from a connection point P0 on the drive power supply line Lp. The vehicle power supply device 1 is provided across both the drive power supply line Lp and the control power supply line Lc. The drive power supply line Lp includes an upstream drive power supply line Lpu that is a power supply path upstream of the vehicle power supply device 1, and a downstream drive power supply line Lpd that is a power supply path downstream of the vehicle power supply device 1. The control power supply line Lc includes an upstream control power supply line Lcu that is a power supply path upstream of the vehicle power supply device 1, and a downstream control power supply line Lcd that is a power supply path downstream of the vehicle power supply device 1.

A control relay 32 that operates in conjunction with a start switch 31 for the vehicle is provided on the upstream control power supply line Lcu. The start switch 31 is a switch operated to start or stop a driving source for traveling of the vehicle, and is, for example, an ignition switch or a power switch. When the start switch 31 is operated to turn on, the control relay 32 switches to an ON state, and the control power supply line Lc is electrically connected. When the start switch 31 is operated to turn off, the control relay 32 switches to an OFF state, and the control power supply line Lc is disconnected.

The downstream drive power supply line Lpd branches downstream and is connected to the operation-side drive circuit 24 and the steering-side drive circuit 26. The downstream control power supply line Lcd branches downstream and is connected to the operation-side control circuit 25 and the steering-side control circuit 27.

### (Vehicle Power Supply Device 1)

A start signal Sig indicating the ON/OFF state of the start switch 31 and an external power supply voltage signal Sve indicating an external power supply voltage Vex, namely a voltage of the external power supply 13, are input to the vehicle power supply device 1. The external power supply voltage signal Sve is output from a voltage sensor 33. When the external power supply voltage Vex of the external power supply 13 is higher than or equal to a decrease determination threshold Vthlo, the vehicle power supply device 1 determines that the external power supply 13 is normal and supplies electric power from the external power supply 13 to the steering device 2. On the other hand, when the external power supply voltage Vex is lower than the decrease determination threshold Vthlo, the vehicle power supply device 1 supplies electric power from an auxiliary power supply 41, which will be described later, to the steering device 2.

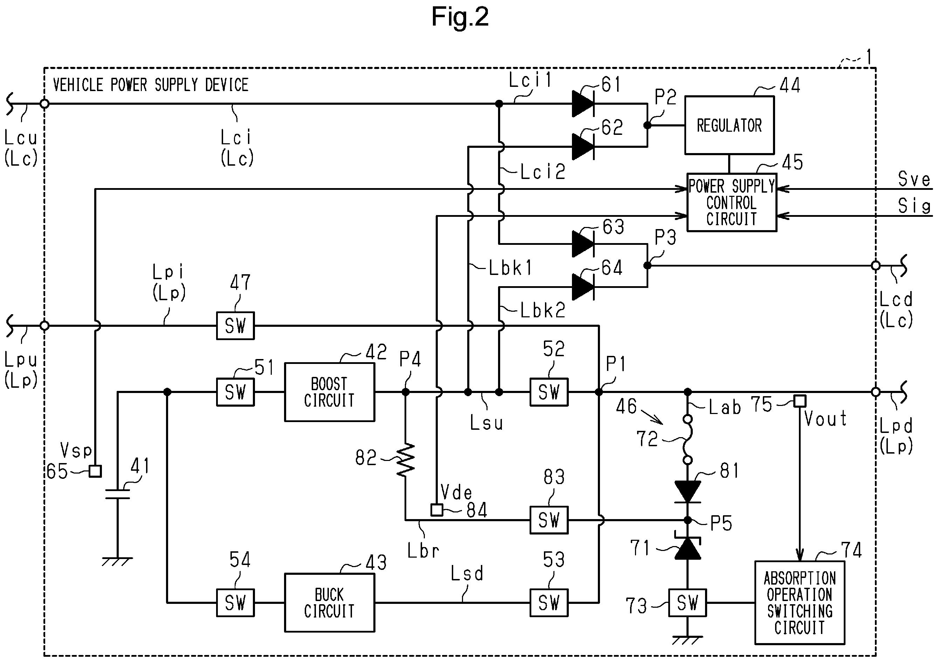

More specifically, as shown in FIG. 2, the vehicle power supply device 1 includes the auxiliary power supply 41, a boost circuit 42, a buck circuit 43, a regulator 44, a power supply control circuit 45 serving as an abnormality detection circuit, a regenerative power absorbing circuit 46, and electric wires that interconnect these circuit components.

The electric wires of the vehicle power supply device 1 include an internal drive power supply line Lpi that constitutes part of the drive power supply line Lp, and an internal control power supply line Lci that constitutes part of the control power supply line Lc. The internal drive power supply line Lpi is provided between the upstream drive power supply line Lpu and the downstream drive power supply line Lpd. A drive relay 47 is provided on the internal drive power supply line Lpi. The internal control power supply line Lci is provided between the upstream control power supply line Lcu and the downstream control power supply line Lcd.

The electric wires of the vehicle power supply device 1 include a discharge line Lsu branching from and extending from the internal drive power supply line Lpi, and a charge line Lsd branching from the internal drive power supply line Lpi and connected in parallel with the discharge line Lsu. The discharge line Lsu and the charge line Lsd both branch from a connection point P1 on the internal drive power supply line Lpi downstream of the drive relay 47. The discharge line Lsu and the charge line Lsd merge on the side opposite to the connection point P1.

The auxiliary power supply 41 is, for example, a capacitor. The auxiliary power supply 41 can be charged and discharged. The auxiliary power supply 41 is connected to the internal drive power supply line Lpi via the discharge line Lsu and the charge line Lsd.

The boost circuit 42 is provided on the discharge line Lsu. The boost circuit 42 boosts an auxiliary power supply voltage Vsp, which is the voltage of the auxiliary power supply 41, and outputs the boosted voltage. A first switching element 51 is provided on the input side of the boost circuit 42 on the discharge line Lsu, that is, on the side on which the auxiliary power supply 41 is connected. A second switching element 52 serving as a backup relay is provided on the output side of the boost circuit 42 on the discharge line Lsu, that is, on the side where the connection point P1 is located. That is, the first switching element 51, the boost circuit 42, and the second switching element 52 are provided on the discharge line Lsu in this order from the auxiliary power supply 41 toward the connection point P1. The boost circuit 42 is, for example, a DC-DC converter. The boost circuit 42 includes a boost control circuit, not shown. The boost circuit 42 boosts an input voltage to a preset boost voltage Vsu by adjusting the ratio at which the boost control circuit turns an internal switching element on and off, and outputs the boosted voltage. Operation and stopping of the boost control circuit, that is, operation and stopping of the boost circuit 42, are controlled by the power supply control circuit 45.

The buck circuit 43 is provided on the charge line Lsd. The buck circuit 43 steps down the external power supply voltage Vex of the external power supply 13 and outputs the stepped-down voltage. A third switching element 53 is provided on the input side of the buck circuit 43 on the charge line Lsd, that is, on the side where the connection point P1 is located. A fourth switching element 54 is provided on the output side of the buck circuit 43 on the charge line Lsd, that is, on the side on which the auxiliary power supply 41 is connected. That is, the third switching element 53, the buck circuit 43, and the fourth switching element 54 are provided on the charge line Lsd in this order from the connection point P1 toward the auxiliary power supply 41. The buck circuit 43 is, for example, a DC-DC converter. The buck circuit 43 includes a buck control circuit, not shown. The buck circuit 43 steps down an input voltage to a preset buck voltage Vsd by adjusting the ratio at which the buck control circuit turns an internal switching element on and off, and outputs the stepped-down voltage. Operation and stopping of the buck control circuit, that is, operation and stopping of the buck circuit 43, are controlled by the power supply control circuit 45.

The drive relay 47, the first switching element 51, the second switching element 52, the third switching element 53, and the fourth switching element 54 are semiconductor switches such as FETs or IGBTs. The ON/OFF states of these switching elements are controlled by the power supply control circuit 45. For convenience of illustration, lines indicating signals output from the power supply control circuit 45 to each circuit component are not shown.

The internal control power supply line Lci branches downstream into a first internal control power supply line Lci1 and a second internal control power supply line Lci2. The first internal control power supply line Lci1 is connected to the regulator 44. The second internal control power supply line Lci2 is connected to the operation-side control circuit 25 and the steering-side control circuit 27 via the downstream control power supply line Lcd.

The electric wires of the vehicle power supply device 1 include a first backup line Lbk1 and a second backup line Lbk2 that branch from the discharge line Lsu. The first backup line Lbk1 and the second backup line Lbk2 branch from between the boost circuit 42 and the second switching element 52 on the discharge line Lsu. The first backup line Lbk1 is connected to the first internal control power supply line Lci1 at a connection point P2. The second backup line Lbk2 is connected to the second internal control power supply line Lci2 at a connection point P3.

Diodes 61, 62 are provided upstream of the connection point P2 on the first internal control power supply line Lci1 and the first backup line Lbk1, respectively. The diodes 61, 62 allow a current to flow from the upstream side toward the downstream side and restrict a current from flowing from the downstream side toward the upstream side. The diodes 61, 62 form a selection circuit that supplies either the voltage supplied from the external power supply 13 or the voltage supplied from the auxiliary power supply 41, whichever is higher, to the regulator 44.

Diodes 63, 64 are provided upstream of the connection point P3 on the second internal control power supply line Lci2 and the second backup line Lbk2, respectively. The diodes 63, 64 allow a current to flow from the upstream side toward the downstream side and restrict a current from flowing from the downstream side toward the upstream side. The diodes 63, 64 form a selection circuit that supplies either the voltage supplied from the external power supply 13 or the voltage supplied from the auxiliary power supply 41, whichever is higher, to the operation-side control circuit 25 and the steering-side control circuit 27.

The regulator 44 adjusts an input voltage to a preset voltage for control circuits. The power supply control circuit 45 is connected to the regulator 44 and operates based on electric power supplied from the regulator 44. The hardware configuration of the power supply control circuit 45 may be the same as that of the operation-side control circuit 25.

The start signal Sig and the external power supply voltage signal Sve are input to the power supply control circuit 45. A voltage sensor 65 that detects the auxiliary power supply voltage Vsp of the auxiliary power supply 41 is connected to the power supply control circuit 45. The power supply control circuit 45 executes various processes (controls) based on the input signals and the detected auxiliary power supply voltage Vsp.

The regenerative power absorbing circuit 46 absorbs regenerative power generated by the steering-side motor 12 due to a reaction force generated when, for example, a steered wheel 5 collides with a curb or the like. The regenerative power absorbing circuit 46 includes an absorption line Lab, a Zener diode 71, a fuse 72, a regenerative switching element 73, and an absorption operation switching circuit 74.

The absorption line Lab connects a portion of the internal drive power supply line Lpi downstream of the drive relay 47 to ground. In the illustrated example, the absorption line Lab extends from a connection point on the internal drive power supply line Lpi downstream of the connection point P1.

The Zener diode 71 is provided on the absorption line Lab. When a reverse voltage applied to the Zener diode 71 exceeds a preset Zener voltage Vze (also referred to as breakdown voltage), the Zener diode 71 allows a current to flow from the cathode to the anode while maintaining the voltage at a value near the Zener voltage Vze. Applying a reverse voltage to the Zener diode 71 means applying a voltage such that the cathode is at a higher potential than the anode. Specifically, the Zener diode 71 has the cathode connected to the internal drive power supply line Lpi via a high-voltage generating diode 81 and the fuse 72, which will be described later, and the anode connected to ground via the regenerative switching element 73. As a result, when the reverse voltage applied to the Zener diode 71 reaches or exceeds the Zener voltage Vze, a current flows to ground through the Zener diode 71.

The fuse 72 is provided upstream of the Zener diode 71 on the absorption line Lab. The fuse 72 blows when a current greater than or equal to a predetermined current flows through the absorption line Lab, thereby disconnecting the absorption line Lab. The predetermined current is, for example, a current that flows when a ground fault occurs in the internal drive power supply line Lpi via the absorption line Lab while electric power is supplied from the external power supply 13 to the internal drive power supply line Lpi. The predetermined current is set in advance.

The regenerative switching element 73 is provided downstream of the Zener diode 71 on the absorption line Lab. The regenerative switching element 73 is, for example, a semiconductor switch such as an FET or an IGBT.

The absorption operation switching circuit 74 controls the ON/OFF state of the regenerative switching element 73 based on an output voltage Vout output from the internal drive power supply line Lpi to the operation-side drive circuit 24 (operation-side motor 11) and the steering-side drive circuit 26 (steering-side motor 12). In the illustrated example, a voltage sensor 75 that detects the output voltage Vout is provided downstream of the connection point P1 on the internal drive power supply line Lpi. The voltage sensor 75 outputs the detected output voltage Vout to the absorption operation switching circuit 74. When the output voltage Vout reaches or exceeds a preset ON-voltage Von, the absorption operation switching circuit 74 controls the regenerative switching element 73 to turn on. When the output voltage Vout falls below a preset OFF-voltage Voff while the regenerative switching element 73 is in an ON state under the control of the absorption operation switching circuit 74, the absorption operation switching circuit 74 controls the regenerative switching element 73 to turn off. The ON-voltage Von is initially set to a value higher than the external power supply voltage Vex, the boost voltage Vsu, and the Zener voltage Vze. **In** another embodiment, the ON-voltage Von may be set to a value substantially equal to the Zener voltage Vze. The OFF-voltage Voff is initially set to a value lower than the ON-voltage Von. The ON-voltage Von and the OFF-voltage Voff in the present embodiment can be changed from their initial values by the power supply control circuit 45.

Next, various processes executed by the power supply control circuit 45 will be described. When the start switch 31 is operated to turn on and thus the control relay 32 is switched to an ON state, electric power is supplied from the external power supply 13 to the power supply control circuit 45. As a result, operation of the power supply control circuit 45 is started.

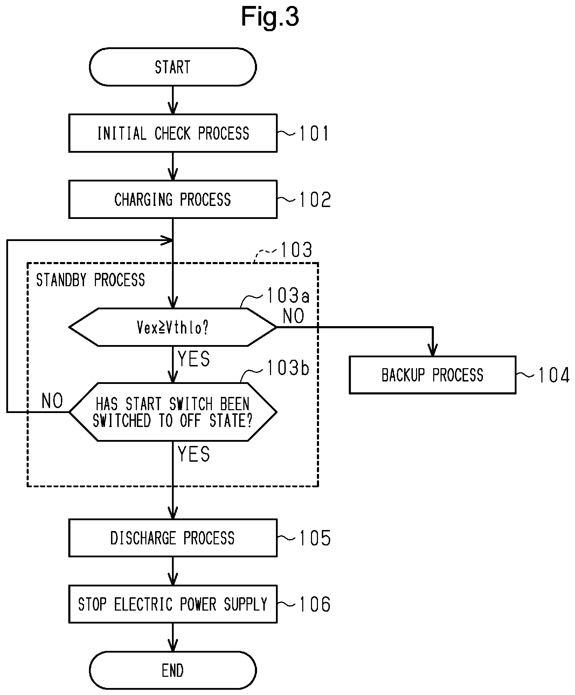

As shown in FIG. 3, when the power supply control circuit 45 starts operating, it executes an initial check process (step 101). **In** the initial check process, one or more abnormality determinations for detecting an abnormality in the vehicle power supply device 1 are performed. The one or more abnormality determinations include, for example, a determination as to whether a short-circuit failure has occurred in the first switching element 51, the second switching element 52, the third switching element 53, and the fourth switching element 54. The one or more abnormality determinations also include an abnormality determination of the regenerative power absorbing circuit 46, which will be described later. When the power supply control circuit 45 determines that an abnormality has occurred in the vehicle power supply device 1, it may, for example, display the occurrence of the abnormality on an indicator, not shown.

When the initial check process is completed, the power supply control circuit 45 then executes a charging process (step 102). The charging process is a process of charging the auxiliary power supply 41 until the auxiliary power supply voltage Vsp of the auxiliary power supply 41 reaches a standby voltage Vsb.

When the charging process is completed, the power supply control circuit 45 executes a standby process while supplying electric power from the external power supply 13 to the steering control device 7 (step 103). The standby process includes determining whether the external power supply voltage Vex of the external power supply 13 has decreased (step 103a) and determining whether the start switch 31 has been switched to an OFF state (step 103b). Whether the external power supply voltage Vex has decreased is determined based on whether the external power supply voltage Vex is higher than or equal to the decrease determination threshold Vthlo.

**In** the charging process and the standby process, the power supply control circuit 45 controls the first switching element 51, the third switching element 53, and the fourth switching element 54 to turn on, and controls the second switching element 52 to turn off. The power supply control circuit 45 also causes the boost circuit 42 and the buck circuit 43 to operate. As a result, the auxiliary power supply 41 is charged based on the buck voltage Vsd output from the buck circuit 43.

When the external power supply voltage Vex of the external power supply 13 decreases during execution of the standby process, that is, when the external power supply voltage Vex is lower than the decrease determination threshold Vthlo (step 103a: NO), the power supply control circuit 45 executes a backup process (step 104). The backup process is a process of stopping supply of electric power from the external power supply 13 to the steering control device 7 and supplying electric power from the auxiliary power supply 41 to the steering control device 7.

**In** the backup process, the power supply control circuit 45 controls the first switching element 51 and the second switching element 52 to turn on, and controls the drive relay 47, the third switching element 53, and the fourth switching element 54 to turn off. The power supply control circuit 45 also continues to operate the boost circuit 42 and stops the buck circuit 43. As a result, the voltage output from the boost circuit 42 is supplied to the steering control device 7. As described above, the boost circuit 42 is also operating during execution of the standby process. Therefore, when the second switching element 52 is switched to an ON state by execution of the backup process, electric power is immediately supplied from the auxiliary power supply 41 to the steering control device 7.

The power supply control circuit 45 of the present embodiment continues the backup process to the extent possible based on electric power from the auxiliary power supply 41, and stops when the electric power of the auxiliary power supply 41 is depleted. **In** another embodiment, the power supply control circuit 45 may determine during execution of the backup process whether the external power supply voltage Vex of the external power supply 13 has reached or exceeded the decrease determination threshold Vthlo. **In** such an embodiment, when the external power supply voltage Vex reaches or exceeds the decrease determination threshold Vthlo, the power supply control circuit 45 returns to the standby process.

When the start switch 31 is operated to turn off during execution of the standby process (step 103b: YES), the power supply control circuit 45 executes a discharge process (step 105). The discharge process is a process of discharging the auxiliary power supply 41 until the auxiliary power supply voltage Vsp of the auxiliary power supply 41 reaches a stop voltage Vst. The stop voltage Vst is set to a value lower than the standby voltage Vsb.

**In** the discharge process, the power supply control circuit 45 controls the first switching element 51 to turn on, and controls the second switching element 52, the third switching element 53, and the fourth switching element 54 to turn off. The power supply control circuit 45 then causes the boost circuit 42 to operate and continues to supply electric power to the power supply control circuit 45 itself, thereby discharging the auxiliary power supply 41.

When the discharge process is completed, the power supply control circuit 45 stops supplying electric power to the power supply control circuit 45 itself (step 106). Specifically, when discharging is performed until the voltage of the auxiliary power supply 41 reaches the stop voltage Vst, the power supply control circuit 45 controls the first switching element 51 to turn off, and stops operation of the boost circuit 42. As a result, electric power is no longer supplied to the power supply control circuit 45, and the power supply control circuit 45 stops.

When, during execution of the standby process, the external power supply voltage Vex of the external power supply 13 is higher than or equal to the decrease determination threshold Vthlo (step 103a: YES) and the start switch 31 is not operated to turn off (step 103b: NO), the processes of steps 103a, 103b are repeated.

For example, it is herein assumed that regenerative power is generated by the steering-side motor 12. When regenerative power is generated during execution of the charging process and the standby process, the drive relay 47 is in an ON state, and thus the regenerative power generated in the steering device 2 is absorbed by the external power supply 13. Therefore, the output voltage Vout does not rise, and the regenerative switching element 73 does not switch to an ON state. That is, the regenerative power absorbing circuit 46 does not operate. On the other hand, when regenerative power is generated during execution of the backup process, the drive relay 47 is in an OFF state, and thus the regenerative power is not absorbed by the external power supply 13. Since the internal switching element of the boost circuit 42 is repeatedly turned on and off, the regenerative power is not absorbed by the auxiliary power supply 41 either. Therefore, as the output voltage Vout rises, the regenerative switching element 73 switches to an ON state, and the regenerative power is absorbed by the regenerative power absorbing circuit 46.

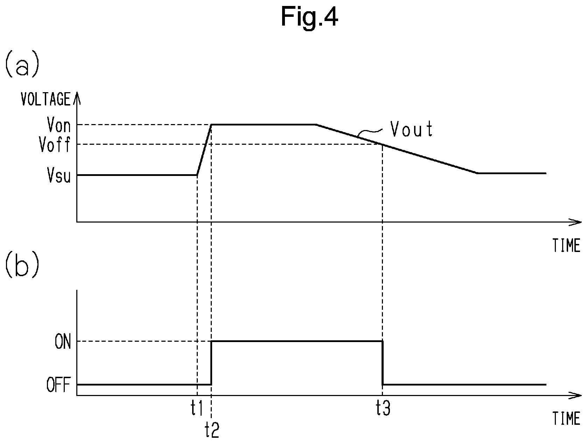

Next, changes in the output voltage Vout when regenerative power is generated during execution of the backup process will be described with reference to FIG. 4. FIG. 4 shows an example of how the output voltage Vout and the ON/OFF state of the regenerative switching element 73 change over time when regenerative power is generated by the steering-side motor 12 at time t1.

As shown in (a) of FIG. 4, before time t1, the magnitude of the output voltage Vout is equal to the boost voltage Vsu output from the boost circuit 42. Since the boost voltage Vsu is lower than the ON-voltage Von, the regenerative switching element 73 is in an OFF state as shown in (b) of FIG. 4. As shown in (a) of FIG. 4, when regenerative power is generated by the steering-side motor 12 at time t1, the output voltage Vout rises. When the output voltage Vout reaches the ON-voltage Von at time t2, the regenerative switching element 73 switches to an ON state as shown in (b) of FIG. 4. As a result, a current flows to ground through the Zener diode 71 while the output voltage Vout is maintained at a value near the Zener voltage Vze. That is, the regenerative power generated by the steering-side motor 12 is absorbed by the regenerative power absorbing circuit 46. Thereafter, as shown in (a) of FIG. 4, the regenerative power generated by the steering-side motor 12 is gradually absorbed, and when the output voltage Vout falls below the OFF-voltage Voff at time t3, the regenerative switching element 73 switches to an OFF state as shown in (b) of FIG. 4.

For example, the following abnormalities may occur in the regenerative power absorbing circuit 46. One abnormality in the regenerative power absorbing circuit 46 is an abnormality in the Zener diode 71. When an abnormality occurs in the Zener diode 71, for example, a current may not flow even when reverse voltage applied to the Zener diode 71 exceeds the Zener voltage Vze, or a current may flow even when the reverse voltage is lower than the Zener voltage Vze. Another abnormality in the regenerative power absorbing circuit 46 is, for example, an abnormality in a path for absorbing regenerative power, such as disconnection of the absorption line Lab. Still another abnormality in the regenerative power absorbing circuit 46 is an operation abnormality in which, due to an abnormality in either or both of the regenerative switching element 73 and the absorption operation switching circuit 74, the regenerative switching element 73 switches to an ON state even though the output voltage Vout is lower than the ON-voltage Von.

When such an abnormality occurs in the regenerative power absorbing circuit 46, regenerative power generated during execution of the backup process cannot be absorbed, and the output voltage Vout may significantly exceed the Zener voltage Vze. As a result, components of the vehicle power supply device 1, such as the boost control circuit, may fail. In view of this, the vehicle power supply device 1 of the present embodiment includes a configuration for detecting an abnormality in the regenerative power absorbing circuit 46.

More specifically, as shown in FIG. 2, the vehicle power supply device 1 includes the high-voltage generating diode 81 provided on the absorption line Lab, and a branch line Lbr branching from the discharge line Lsu. The vehicle power supply device 1 further includes a resistor 82 and a fifth switching element 83 that are provided on the branch line Lbr.

The high-voltage generating diode 81 is provided between the fuse 72 and the Zener diode 71 on the absorption line Lab. The high-voltage generating diode 81 allows a current to flow from the upstream side toward the downstream side and restricts a current from flowing from the downstream side toward the upstream side. That is, the high-voltage generating diode 81 allows a current to flow from the internal drive power supply line Lpi toward the Zener diode 71 and restricts a current from flowing from the Zener diode 71 toward the internal drive power supply line Lpi.

The branch line Lbr branches from a connection point P4 between the boost circuit 42 and the second switching element 52 on the discharge line Lsu and is connected to a connection point P5 between the high-voltage generating diode 81 and the Zener diode 71 on the absorption line Lab. The resistor 82 and the fifth switching element 83 are provided on the branch line Lbr in this order from the connection point P4 toward the connection point P5.

The fifth switching element 83 is, for example, a semiconductor switch such as an FET or an IGBT. The ON/OFF state of the fifth switching element 83 is controlled by the power supply control circuit 45. For convenience of illustration, a line indicating a signal output from the power supply control circuit 45 to the fifth switching element 83 is not shown. The fifth switching element 83 is controlled to turn on only when an abnormality determination of the regenerative power absorbing circuit 46 is performed, and is controlled to turn off at other times. The configuration for detecting an abnormality in the regenerative power absorbing circuit 46 therefore does not affect execution of the charging process, the standby process, the backup process, and the discharge process.

A voltage sensor 84 that detects a determination voltage Vde, which is a voltage between the resistor 82 and the fifth switching element 83 on the branch line Lbr, is provided on the branch line Lbr. The determination voltage Vde detected by the voltage sensor 84 is output to the power supply control circuit 45 that is an abnormality detection circuit.

The power supply control circuit 45 performs an abnormality determination of the regenerative power absorbing circuit 46 based on the input determination voltage Vde. As described above, the power supply control circuit 45 of the present embodiment performs an abnormality determination of the regenerative power absorbing circuit 46 as one of the abnormality determinations performed in the initial check process. The power supply control circuit 45 performs three abnormality determinations: an abnormality in the Zener diode 71, an abnormality in the path for absorbing regenerative power, and an operation abnormality in the regenerative switching element 73. The power supply control circuit 45 performs the determinations, for example, in the order of an abnormality in the path for absorbing regenerative power, an operation abnormality in the regenerative switching element 73, and an abnormality in the Zener diode 71. However, the order of the abnormality determinations may be changed as appropriate.

More specifically, when determining whether an abnormality has occurred in the Zener diode 71, the power supply control circuit 45 controls the second switching element 52 to turn off and the fifth switching element 83 to turn on, and controls the boost circuit 42 to output a voltage higher than the Zener voltage Vze. At this time, the power supply control circuit 45 of the present embodiment controls the drive relay 47 to turn on and changes the ON-voltage Von of the absorption operation switching circuit 74 from its initial value to a value lower than the external power supply voltage Vex. As a result, since the output voltage Vout reaches or exceeds the ON-voltage Von, the regenerative switching element 73 is controlled to turn on by the absorption operation switching circuit 74. **In** this state, the power supply control circuit 45 determines whether an abnormality has occurred in the Zener diode 71 based on whether the determination voltage Vde is outside a predetermined voltage range including the Zener voltage Vze. The predetermined voltage range is a voltage range within which it can be determined that the Zener diode 71 normally maintains a voltage when a current flows through the Zener diode 71. The predetermined voltage range is set in advance. When the determination voltage Vde is outside the predetermined voltage range, the power supply control circuit 45 determines that an abnormality has occurred in the Zener diode 71.

When determining whether an abnormality has occurred in the path for absorbing regenerative power, the power supply control circuit 45 controls the drive relay 47 and the fifth switching element 83 to turn on and the second switching element 52, which is a backup relay, to turn off, and controls the boost circuit 42 to stop. **In** this state, the power supply control circuit 45 determines whether an abnormality has occurred in the path for absorbing regenerative power based on whether the determination voltage Vde is lower than an open-abnormality determination threshold Vthop. **In** this state, for example, when no abnormality such as disconnection has occurred in the absorption line Lab, a voltage based on the external power supply voltage Vex is generated in the branch line Lbr. The open-abnormality determination threshold Vthop is, for example, a value that can be regarded as indicating that the determination voltage Vde is zero, and is set to a value slightly greater than zero in consideration of the influence of noise and the like. When the determination voltage Vde is lower than the open-abnormality determination threshold Vthop, the power supply control circuit 45 determines that an abnormality has occurred in the path for absorbing regenerative power.

When determining whether an operation abnormality has occurred in the regenerative switching element 73, the power supply control circuit 45 controls the second switching element 52 to turn off and the fifth switching element 83 to turn on, and controls the boost circuit 42 to output a voltage higher than the Zener voltage Vze. At this time, the power supply control circuit 45 of the present embodiment controls the drive relay 47 to turn on and does not change the ON-voltage Von of the absorption operation switching circuit 74 from its initial value. As a result, since the output voltage Vout is lower than the ON-voltage Von, the regenerative switching element 73 is controlled to turn off by the absorption operation switching circuit 74. **In** this state, the power supply control circuit 45 determines whether an abnormality has occurred in the regenerative switching element 73 based on whether the determination voltage Vde is lower than a conduction-abnormality determination threshold Vthco. **In** this state, when the regenerative switching element 73 is properly switched to an OFF state, no current flows through the Zener diode 71 even when a reverse voltage applied to the Zener diode 71 exceeds the Zener voltage Vze. Therefore, the determination voltage Vde has a value corresponding to a voltage higher than the Zener voltage Vze output from the boost circuit 42. On the other hand, when the regenerative switching element 73 is not switched to an OFF state, that is, when the regenerative switching element 73 is in an ON state, a current flows while the voltage is maintained at a value near the Zener voltage Vze by the Zener diode 71. In view of this, the conduction-abnormality determination threshold Vthco is set in advance, for example, to a value near the upper limit of the predetermined voltage range. When the determination voltage Vde is lower than the conduction-abnormality determination threshold Vthco, the power supply control circuit 45 determines that an abnormality has occurred in either or both of the regenerative switching element 73 and the absorption operation switching circuit 74.

Next, the functions and effects of the present embodiment will be described.
(1) The vehicle power supply device 1 includes the high-voltage generating diode 81 provided upstream of the Zener diode 71 on the absorption line Lab, and the branch line Lbr that branches from the connection point P4 on the discharge line Lsu and is connected to the connection point P5 on the absorption line Lab.

With the above configuration, a reverse voltage exceeding the Zener voltage Vze can be applied to the Zener diode 71 by the boost circuit 42 while the second switching element 52 is switched to an OFF state. Accordingly, an abnormality in the Zener diode 71 can be determined.

(2) The power supply control circuit 45 determines that an abnormality has occurred in the Zener diode 71 when the determination voltage Vde is outside the predetermined voltage range while the second switching element 52 is controlled to turn off, the regenerative switching element 73 is controlled to turn on, and the boost circuit 42 is controlled to output a voltage higher than the Zener voltage Vze. Accordingly, an abnormality in the regenerative power absorbing circuit 46 can be appropriately determined.

(3) The power supply control circuit 45 determines that an abnormality has occurred in the path for absorbing regenerative power when the determination voltage Vde is lower than the open-abnormality determination threshold Vthop while the drive relay 47 is controlled to turn on, the second switching element 52 is controlled to turn off, and the boost circuit 42 is controlled to stop. Accordingly, an abnormality in the regenerative power absorbing circuit 46 can be appropriately determined.

(4) The regenerative power absorbing circuit 46 includes the regenerative switching element 73 provided downstream of the Zener diode 71 on the absorption line Lab, and the absorption operation switching circuit 74 configured to control the ON/OFF state of the regenerative switching element 73 based on the output voltage Vout.

The external power supply voltage Vex may temporarily increase depending on the condition of the vehicle. In such a case, when an abnormality causing the Zener voltage Vze to decrease occurs in the Zener diode 71, a ground fault occurs in the internal drive power supply line Lpi via the absorption line Lab. As a result, there is a possibility that electric power cannot be appropriately supplied from the external power supply 13 to the steering device 2. In this regard, with the above configuration, the regenerative switching element 73 is maintained in an OFF state unless, due to generation of regenerative power, the output voltage Vout becomes high enough to adversely affect the boost control circuit or the like. This suppresses occurrence of a ground fault in the internal drive power supply line Lpi and allows electric power to be stably supplied from the external power supply 13 to the steering device 2.

An abnormality determination of the Zener diode 71 is performed while the regenerative switching element 73 is controlled to turned on. Therefore, even when the regenerative switching element 73 is provided, an abnormality determination of the Zener diode 71 can be appropriately performed.

(5) The power supply control circuit 45 determines that an abnormality has occurred in either or both of the regenerative switching element 73 and the absorption operation switching circuit 74 when the determination voltage Vde is lower than the conduction-abnormality determination threshold Vthco while the second switching element 52 is controlled to turn off, the regenerative switching element 73 is controlled to turn off, and the boost circuit 42 is controlled to output a voltage higher than the Zener voltage Vze. Accordingly, an abnormality in the regenerative power absorbing circuit 46 can be appropriately determined.

(6) The vehicle power supply device 1 includes the fuse 72 provided on the absorption line Lab.

For example, when the external power supply voltage Vex temporarily increases in a state where a short-circuit failure has occurred in the regenerative switching element 73 and an abnormality causing the Zener voltage Vze to decrease has occurred in the Zener diode 71, a ground fault may occur in the internal drive power supply line Lpi via the absorption line Lab. In the above configuration, in such a case, a large current flows through the absorption line Lab, thereby causing the fuse 72 to blow. This suppresses occurrence of a ground fault in the internal drive power supply line Lpi and allows electric power to be stably supplied from the external power supply 13 to the steering device 2.

The present embodiment can be modified as follows. The present embodiment and the following modifications may be combined as long as no technical contradiction arises.
- In the above embodiment, the fuse 72 is provided upstream of the high-voltage generating diode 81 on the absorption line Lab. However, the present disclosure is not limited to this, and the fuse 72 may be provided, for example, downstream of the high-voltage generating diode 81. Alternatively, the fuse 72 need not be provided on the absorption line Lab.
- In the above embodiment, the power supply control circuit 45 may acquire the output voltage Vout and control the ON/OFF state of the regenerative switching element 73 based on the acquired output voltage Vout. In this case, the regenerative power absorbing circuit 46 need not include the absorption operation switching circuit 74.
- In the above embodiment, the regenerative power absorbing circuit 46 need not include the regenerative switching element 73 and the absorption operation switching circuit 74.
- In the above embodiment, the power supply control circuit 45 is configured to perform three abnormality determinations: an abnormality in the Zener diode 71, an abnormality in the path for absorbing regenerative power, and an operation abnormality in the regenerative switching element 73. However, the present disclosure is not limited to this, and the power supply control circuit 45 may perform at least one of these three abnormality determinations.
- In the above embodiment, the absorption line Lab extends from a connection point on the internal drive power supply line Lpi downstream of the connection point P1. However, the present disclosure is not limited to this, and the absorption line Lab may extend, for example, from a portion of the internal drive power supply line Lpi between the drive relay 47 and the connection point P1. Alternatively, the absorption line Lab may extend from between the connection point P1 and the second switching element 52 on the discharge line Lsu, or may extend from between the connection point P1 and the third switching element 53 on the charge line Lsd.
- In the above embodiment, the power supply control circuit 45 may perform an abnormality determination of the regenerative power absorbing circuit 46 at any time other than during execution of the initial check process.
- In the above embodiment, an abnormality detection circuit that performs an abnormality determination of the regenerative power absorbing circuit 46 may be provided in the vehicle power supply device 1 separately from the power supply control circuit 45, and the power supply control circuit 45 need not perform the abnormality determination of the regenerative power absorbing circuit 46.
- In the above embodiment, the vehicle power supply device 1 need not include the charge line Lsd, the buck circuit 43, the third switching element 53, and the fourth switching element 54.
- In the above embodiment, the steering device 2 may be an electric power steering system that applies torque of a motor to a steering shaft or a rack shaft.
- In the above embodiment, the vehicle power supply device 1 supplies electric power to the steering device 2. However, the present disclosure is not limited to this, and electric power may be supplied, for example, to a motor used as a driving source for traveling.

## Claims

1. A vehicle power supply device configured to supply electric power to a power supply target, the vehicle power supply device comprising:
a power supply line that constitutes part of a power supply path through which electric power is supplied from an external power supply to the power supply target;
a drive relay provided on the power supply line;
a discharge line branching from a connection point on the power supply line downstream of the drive relay;
an auxiliary power supply connected to the power supply line via the discharge line;
a boost circuit provided on the discharge line, the boost circuit being configured to boost a voltage of the auxiliary power supply and output the boosted voltage;
a backup relay provided on an output side of the boost circuit on the discharge line; and
a regenerative power absorbing circuit configured to absorb regenerative power generated in the power supply target, wherein:
the regenerative power absorbing circuit includes
an absorption line that connects a portion of the power supply line downstream of the drive relay to ground, and
a Zener diode provided on the absorption line, the Zener diode being configured to allow a current to flow from the power supply line toward ground when a reverse voltage applied to the Zener diode is higher than or equal to a Zener voltage; and
the vehicle power supply device further includes
a high-voltage generating diode provided upstream of the Zener diode on the absorption line, the high-voltage generating diode being configured to allow a current to flow from the power supply line toward the Zener diode and to restrict a current from flowing from the Zener diode toward the power supply line, and
a branch line branching from a connection point on the discharge line between the boost circuit and the backup relay and connected to a connection point on the absorption line between the high-voltage generating diode and the Zener diode.

2. The vehicle power supply device according to claim 1, further comprising:
a voltage sensor configured to detect a determination voltage that is a voltage on the branch line; and
an abnormality detection circuit configured to perform one or more abnormality determinations for detecting an abnormality in the regenerative power absorbing circuit,
wherein the abnormality detection circuit is further configured to determine that an abnormality has occurred in the Zener diode when the determination voltage is outside a predetermined voltage range including the Zener voltage while the backup relay is controlled to turn off and the boost circuit is controlled to output a voltage higher than the Zener voltage.

3. The vehicle power supply device according to claim 2, wherein the abnormality detection circuit is further configured to determine that an abnormality has occurred in a path for absorbing the regenerative power, when the determination voltage is lower than an open-abnormality determination threshold while the drive relay is controlled to turn on, the backup relay is controlled to turn off, and the boost circuit is controlled to stop.

4. The vehicle power supply device according to claim 2 or 3, wherein the regenerative power absorbing circuit further includes
a regenerative switching element provided downstream of the Zener diode on the absorption line, and
an absorption operation switching circuit configured to control whether the regenerative switching element is ON or OFF based on an output voltage output from the power supply line to the power supply target.

5. The vehicle power supply device according to claim 4, wherein the abnormality detection circuit is further configured to determine that an abnormality has occurred in either or both of the regenerative switching element and the absorption operation switching circuit when the determination voltage is lower than a conduction abnormality determination threshold while the backup relay is controlled to turn off, the regenerative switching element is controlled to turn off, and the boost circuit is controlled to output a voltage higher than the Zener voltage.

6. The vehicle power supply device according to any one of claims 1 to 3, further comprising a fuse provided on the absorption line.

7. A method for detecting an abnormality in a vehicle power supply device configured to supply electric power to a power supply target, wherein:
the vehicle power supply device includes
a power supply line that constitutes part of a power supply path through which electric power is supplied from an external power supply to the power supply target,
a drive relay provided on the power supply line,
a discharge line branching from a connection point on the power supply line downstream of the drive relay,
an auxiliary power supply connected to the power supply line via the discharge line,
a boost circuit provided on the discharge line, the boost circuit being configured to boost a voltage of the auxiliary power supply and output the boosted voltage,
a backup relay provided on an output side of the boost circuit on the discharge line, and
a regenerative power absorbing circuit configured to absorb regenerative power generated in the power supply target;
the regenerative power absorbing circuit includes
an absorption line that connects a portion of the power supply line downstream of the drive relay to ground, and
a Zener diode provided on the absorption line, the Zener diode being configured to allow a current to flow from the power supply line toward ground when a reverse voltage applied to the Zener diode is higher than or equal to a Zener voltage;
the vehicle power supply device further includes
a high-voltage generating diode provided upstream of the Zener diode on the absorption line, the high-voltage generating diode being configured to allow a current to flow from the power supply line toward the Zener diode and to restrict a current from flowing from the Zener diode toward the power supply line, and
a branch line branching from a connection point on the discharge line between the boost circuit and the backup relay and connected to a connection point on the absorption line between the high-voltage generating diode and the Zener diode; and
the method for detecting an abnormality includes:
detecting a determination voltage that is a voltage on the branch line; and
determining that an abnormality has occurred in the Zener diode when the determination voltage is outside a predetermined voltage range including the Zener voltage while the backup relay is controlled to turn off and the boost circuit is controlled to output a voltage higher than the Zener voltage.
